Europäisches Patentamt

European Patent Office    (11) Publication number:  **0 305 171**

Office européen des brevets                          **A1**

(12) **EUROPEAN PATENT APPLICATION**

(21) Application number: 88307851.1

(22) Date of filing: 24.08.88

(51) Int. Cl.⁴: **F 16 L 51/00**
F 16 L 27/12, F 16 L 55/04,
G 21 D 1/02

(30) Priority: 24.08.87 US 88580

(43) Date of publication of application:
01.03.89 Bulletin 89/09

(84) Designated Contracting States:
AT BE CH DE ES FR GB GR IT LI LU NL SE

(71) Applicant: **ELECTRIC POWER RESEARCH INSTITUTE, INC**
**3412 Hillview Avenue**
**Palo Alto California 94303 (US)**

(72) Inventor: **Leung, James S.M.**
**125 University Avenue**
**Berkeley California 94701 (US)**

**Cloud, Robert B.**
**125 University Avenue**
**Berkeley California 94701 (US)**

**Cortella, Julian M.**
**125 University Avenue**
**Berkeley California 94701 (US)**

(74) Representative: **Abnett, Richard Charles et al**
**REDDIE & GROSE 16 Theobalds Road**
**London WC1X 8PL (GB)**

(54) Seismic stop support.

㉗ A stop support (11) for supporting high temperature piping in nuclear power plants. The support comprises a cylinder (17) having an internal cavity (13), the length of which is adjustable and in which a piston (25) is disposed. The longitudinal travel of the piston (25) in the cavity (13) is limited by energy absorbing flanges (31) on the piston (25) formed by impact plates and springs (41), and the internal end surfaces (47) of the cavity (13). At the free ends of the cylinder (17) and piston (25) are means (43, 45) for interconnecting the support between the support anchor and the structure to be supported.

FIG. 2.

Description

# SEISMIC STOP SUPPORT

## BACKGROUND OF THE INVENTION

### Field of the Invention

The present invention relates to snubbers for use on piping and components of nuclear power plants and more particularly to an improved piston and cylinder stop support which limits the movement of the supported structure.

### Description of the Prior Art

During the 1970's, an increasing concern was expressed by the U.S. Atomic Energy Commission and the U.S. Nuclear Regulatory Commission personnel regarding the reliability and security of nuclear power plant piping under severe seismic loads. Attention was therefore directed to analyzing the design and safety of the piping and components, and extensive testing programs were undertaken.

Two conflicting requirements characterize the design of nuclear power plant piping. First, in order to minimize thermal stresses, the pipe supports must permit pipe movement from rising thermal expansion to be relatively unrestrained. second, in order to minimize seismic stresses, the supports are required to restrain the pipe motion in the event of an earthquake. The need to resolve this conflict of function in the pipe supports led to the development of snubbers.

Snubbers permit pipe displacement resulting from slow movements, such as thermal expansion, but they restrain rapid motion, such as that induced by earthquake. They are considered active supports because they rely on moving components in the snubbers. The two basic types of snubbers are hydraulic and mechanical. Either type moves freely to accommodate thermal movement of piping and locks up if the piping or its components are subjected to rapid movement and high amplitudes caused by a seismic event or dynamic load such as water hammer.

The problems associated with the hydraulic and mechanical snubbers have been documented and set forth in a Nuclear Regulatory Commission entitled, Aging and Service Wear of Hydraulic and Mechanical Snubbers Used on Safety-Related Piping and Components of Nuclear Power Plants - Phase I Study - which is NUREG/CR-4279; PNL-5479; Vol. 1 (RM, RV), prepared by S.H. Bush, P.G. Heasler, R.E. Dodge of the Pacific Northwest Laboratory, Richland, WA 99352, completed January, 1986, and published February, 1986. It was prepared for the Division of Engineering Technology, Office of Nuclear Regulatory Research, U.S. Nuclear Regulatory Commission, Washington, D.C. 20555, NRC FIN B2865. A copy of that circular is filed with the patent application for the present invention and made a part of the record hereof.

The goal of the seismic design procedures was to maintain piping frequencies sufficiently above the dominant earthquake frequencies such that piping response was not significantly amplified. This can be readily accomplished by relying on seismic snubbers to restrain the earthquake loads. The ease with which seismic snubbers can be employed in analysis, and the demands of plant design and construction deadlines, have resulted in a proliferation of seismic snubbers in nuclear power plant piping.

Although convenient for purposes of design and analysis, snubbers have many disadvantages that become apparent in the course of plant construction and operation. Both mechanical and hydraulic snubbers are sensitive devices that require special care in installation. Careless handling, forced alignment of the spherical bearings, and arc strikes from negligent welding have resulted in malfunctions. Problems arising from leaking fluid, degradation of seal material, and corrosion have necessitated frequent in-service inspection and testing at all nuclear power plants.

Because many snubbers are located in areas of high radiation, exposure of personnel to radiation during maintenance is of concern. Many recently built nuclear power plants use as many as 2,000 snubbers, costing anywhere from $1,000 to $15,000 each. Maintenance costs for a single snubber in the lifetime of a plant may reach $30,000. In view of these problems, considerable advantages in cost and reliability could be gained by eliminating or reducing the use of snubbers. However, some form of restraint is necessary to restrict large seismic displacement and maintain piping stresses at acceptable levels. Any such restraints must be employed as easily as snubbers in the piping system analysis.

## SUMMARY OF THE INVENTION

The present invention is a passive seismic support system called a seismic stop support which utilizes the theory of limit stops with gaps which are sized to allow for thermal expansion while preventing large seismic displacements. The idea of using limit stops to restrict the seismic motion of piping is not entirely new. The concept was successful in some fossil-fueled power plants. The concept utilized box frames constructed around the pipe as limit stops with substantial clearances of 2"-4" to permit thermal motion. By contemporary standards, this method of seismic support is quite primitive. However, in a fossil-fueled plant near Bakersfield, California, seismic supports of this type completely protected hot, high pressure steam and feed water lines during the severe 1952 Tehachapi earthquake.

Piping that is seismically restrained with limit stops is generally more flexible and has lower natural frequencies than piping protected by rigid or snubber supports. A flexible piping system will incur lower stresses from seismically induced deflections, such as those from differential support or anchor displacement, than will a stiff system. The primary drawback to the employment of limit stops is the difficulty of seismic analysis. Current linear dynamic analysis methods for nuclear power plant piping cannot be readily applied when gaps between the pipe and its support are used. In these circumstances, the analytical model for the piping system becomes non-linear because the restraint stiffness at the limit stop varies depending upon whether the pipe is in contact with the restraint. Direct integration of the equations of motion to solve non-linear problems of this type is time-consuming and prohibitively expensive. Therefore, other methods are used.

The seismic stop support of the present invention comprises a cylinder having an adjustable length internal cavity and a piston disposed in the cavity of the cylinder which has energy absorbing flanges formed thereon which limit the longitudinal travel or displacement of the piston in the cavity. Means are disposed at the free ends of the cylinder and the piston for interconnecting them between a support anchor and the supported structure. The device of the present invention is a passive pipe support which was developed along with an economical approach to calculating seismic displacements and stresses in a piping system with limit stops by using an equivalent linear analysis technique. This analysis technique makes utilization of the present invention as a substitute for a snubber practical.

## OBJECTS OF THE INVENTION

It is therefore an important object of the present invention to provide a passive seismic stop support which utilizes limit stops to restrict the seismic motion of nuclear power plant piping.

It is another object of the present invention to provide a passive seismic stop support which accommodates thermal expansion and motion of nuclear power plant piping and provides a means for measuring the actual thermal expansion of the piping during initial heat-up testing of the plant.

It is a further object of the present invention to provide a seismic stop support that is generally more flexible and has lower natural frequencies than nuclear power plant piping protected by rigid or snubber supports.

It is still another object of the present invention to provide a seismic stop support which is much less expensive than the present snubber systems and requires considerably less maintenance, for large overall cost reductions, as compared with the present snubber devices.

And it is yet a further object of the present invention to provide a passive seismic stop support which can be easily installed to replace existing snubbers utilizing the existing attachment hardware and piping components and which does not require modification of existing structures.

Other objects of the invention will become apparent when the preferred embodiment thereof is considered in conjunction with the accompanying drawings.

## DESCRIPTION OF THE DRAWINGS

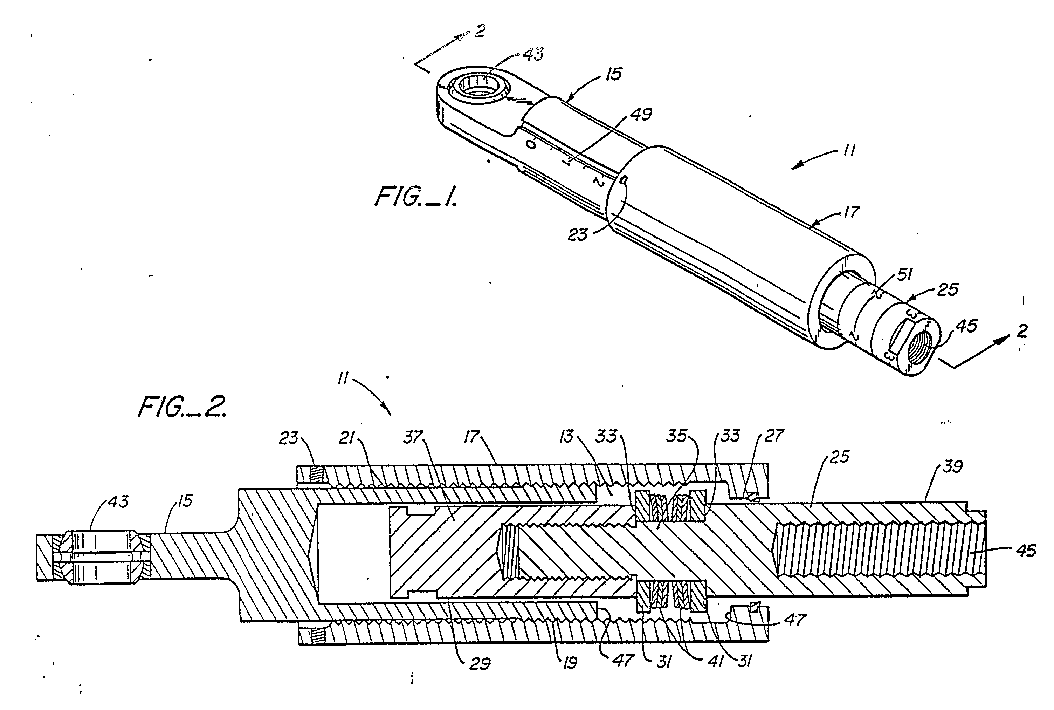

FIG. 1 is a perspective view of the seismic stop support of the present invention; and
FIG. 2 is a cross-section and side elevation taken along lines 2-2 of FIG. 1.

## DESCRIPTION OF THE PREFERRED EMBODIMENT

The present invention is a passive seismic stop support. It includes a cylinder which has an adjustable length internal cavity 13. This is accomplished by having inner and outer opposed hollow cylindrical halves 15, 17 which are engaged in a male-female sliding relation. The sliding relation is accomplished in the preferred embodiment by providing external threads 19 on the male member and internal threads 21 on the female member and threadably engaging the two halves of the cylinder. The cylinder also includes locking means for fixing the length of the internal cavity at predetermined sizes. This is accomplished by set screws 23 which project through the outer cylindrical half to engage the internal male member. A plurality of such set screws are disposed around the periphery of the outer cylinder half.

A piston 25 is disposed in the cavity formed by the cylinder halves and projects through a hole 27 in the end of the outer cylinder half. The guide portion 29 of the piston reciprocates in the internal cylindrical section of the internal cylindrical half. The piston is provided with energy absorbing flanges 31 called impact plates which are mounted on the piston and which limit the longitudinal reciprocating travel of the piston in the cavity 13. The energy absorbing flanges, or impact plates, are in the form of washers which are mounted on the pistons and are free to move between a first pair of spaced limit stops 33 formed on the piston. The limit stops formed on the piston are a pair of shoulders at opposite ends of a reduced diameter center section 35 of the piston.

The piston 25 is formed in two pieces which are threadably engaged. Each of the pieces has a shoulder 33 formed thereon and the threaded adjustment of the female piston piece 37 onto the male piston piece 39 sets the distance between the shoulders. The shoulder of the female piece is simply the abutting end thereof while the shoulder on the male piece is disposed in spaced relation to the abutting end of the female piece along the guide end 29 of the piston.

The energy absorbing means includes a spring means disposed between the impact plates urging them apart against the shoulders 33 on the piston. In the preferred embodiment, the spring means is a multiple set of Belleville springs 41. Adjustment of the female piston piece 37 on the male piece 39 by the threaded engagement can vary the distance between the shoulders, but usually the distance is predetermined based on the spring means selected for the application and the desired preloading.

During assembly the female portion of the piston can be screwed onto the male portion to move together or separate the impact plates thereby increasing or decreasing the pressure on the springs disposed therebetween to preload them. The spring characteristics are selected in response to the required design stiffness so that a constant stiffness value is maintained within the rated capacity of the support during a seismic event. This constant pre-determined stiffness is an important feature of the present invention not obtainable from the prior art snubbers or box frames constructed around piping.

The threaded connection between the inner and outer cylinders also permits the length of the space within which the piston can reciprocate to be varied. A second set of stop limits 47, which are adjustable, are provided inside the cylinder for the impact plates to contact: one is the end of the cylinder inside the female cylinder half while the other is the abutting end of the male cylinder half. In operative position, the impact plates will be retracted to one end of the cylinder when the piping is at rest or cool. The piston will then move the impact plates to the other end of the cavity as the thermal expansion of the pipes takes place. The length of the internal cavity is adjusted so that when the pipes are cool, the impact plates are disposed against a stop limit at one end of the cylinder and when complete thermal expansion of the pipe occurs, the impact plates will be bearing against the stop limit at the other end of the cavity. The external surface of the inner cylinder 15 can also be scribed with indicia 49 measured against the end of the outer cylinder half 17 for the purpose of accurately setting or resetting the total length of the internal cavity of the seismic stop support cylinders. Corresponding indicia are scribed on the outer surface of the male piston piece 39 to indicate the relative position of the piston, and hence the impact plates 31, within the internal cavity 13 and relative to the stop limits 47. Thus, the present invention also provides a means for measuring the actual thermal expansion of the pipe during initial heat-up testing of nuclear power plants.

Means are disposed at the free ends of the cylinder and the piston for interconnecting the seismic stop support between a support anchor, such as a wall or stanchion, and the supported structure which, in most cases, is a pipe. In the preferred embodiment, the male half of the cylinder is provided with a spherical bearing end connector 43, and the free end of the piston 39, which is the male portion, includes internal threads 45 for engaging or for creating the interface for external connectors.

In the event of a seismic event, further movement against a stop limit will cause compression of the springs 41. If there is full movement of the piston to the opposite end of the cylinder, the piston impact plates will again impact against the opposite stop limit and the springs will cushion the deceleration. Thus, the piston can reciprocate within the stop limits and the impacts at the ends of travel are cushioned.

The device of the present invention can be easily retrofitted into existing nuclear power plants to replace snubbers. The passive seismic stop support described herein can make use of existing attachment hardware and piping components and does not require modification of existing structures. It accommodates thermal expansion of the piping and yet restricts seismic motion of nuclear power plant piping. It is much less expensive to manufacture than present snubber systems and requires essentially no periodic maintenance for large overall cost reductions as compared with the present snubber devices.

Thus, it will be seen from this description of the preferred embodiment that all of the objects and advantages of the invention are achieved. While the preferred embodiment of the invention has been described in considerable detail herein, the invention is not to be limited to such details as have been set forth except as may be necessitated by the appended claims.

**Claims**

1. A seismic stop support comprising a cylinder having an adjustable length internal cavity, a piston disposed in the cavity of said cylinder and having energy absorbing flanges formed thereon which limit the longitudinal travel of the piston in said cavity, said travel being dependent upon the length of said cavity, and means disposed at the free ends of the cylinder and the piston for interconnecting the seismic stop support between the support anchor and the supported structure.

2. The seismic stop support of Claim 1 wherein the cylinder includes inner and outer cylinder halves which are engaged in a sliding relation to provide an adjustable length cavity.

3. The seismic stop support of Claim 2 wherein the cylinder halves are threadably engaged.

4. The seismic stop support of Claim 1 including indicia disposed on at least said piston to indicate the position thereof in said cavity.

5. The seismic stop support of Claim 1 wherein the energy absorbing flanges on said piston include a pair of impact plates in the form of washers mounted on said piston which are free to move between a first pair of limit stops, and a spring means disposed between said impact plates urging them apart against said stops, and the cylinder includes a second pair of limit stops having an adjustable length between them between which said impact plates are free to move.

6. The seismic stop support of Claim 5 wherein the limit stops are formed on said piston by a pair of shoulders at opposite ends of a smaller diameter center section of the length of said piston.

7. The seismic stop support of Claim 6 wherein said piston is formed in two pieces which are threadably engaged, each of said pieces having a shoulder formed thereon and the adjustment of the female piece on the male piece adjusts the distance between the shoulders.

8. The seismic stop support of Claim 5 wherein the springs means is a multiple of Belleville springs.

9. A seismic stop support comprising
a cylinder including a pair of cylinder halves which form an adjustable length internal cavity and are threadably engaged and form stop limits the distance between which is adjustable based on the positioning of the threaded engagement of the cylinder halves,
a piston disposed in the cavity of said cylinder, said piston being formed of two halves which are threadably engaged and have shoulders formed thereon, the abutting end of the female piece forming one of said shoulders while the other of said shoulders formed on the male piece is disposed in spaced relation to the abutting end of said female piece,
a pair of impact plates in the form of washers disposed on said piston between said shoulders and free to move therealong, said impact plates also being free to move between said stop limits formed in said cylinder,
spring means disposed between said impact plates urging them apart, and
means disposed at the free ends of said cylinder and the piston for interconnecting the seismic stop support between a support anchor and the supported structure.

10. The seismic stop support of Claim 9 within the female member of said cylinder halves is provided with indicia disposed thereon for indicating the positioning of the male cylinder half in the female half and said piston is provided with indicia disposed thereon to indicate the positioning thereof in said cavity.

FIG._1.

FIG._2.

EP 0 305 171 A1

# EUROPEAN SEARCH REPORT

**European Patent Office**

. Application number

| DOCUMENTS CONSIDERED TO BE RELEVANT | | | EP 88307851.1 |

| Category | Citation of document with indication, where appropriate, of relevant passages | Relevant to claim | CLASSIFICATION OF THE APPLICATION (Int. Cl.4) |
|---|---|---|---|
| A | US - A - 4 620 688 (KHLAFALLAH et al.)  * Totality *  -- | 1,4 | F 16 L 51/00  F 16 L 27/12  F 16 L 55/04  G 21 D  1/02 |
| A | FR - A - 2 229 011 (F.I.P. FORMA-TURA INIEZIONE POLIMERI S.P.A.)  * Totality *  -- | 1,2 | |
| A | DE - A - 2 419 132 (A/SE. RASMUSSEN)  ---- | | |

| | | | TECHNICAL FIELDS SEARCHED (Int. Cl.4) |
|---|---|---|---|
| | | | F 16 L 15/00  F 16 L 27/00  F 16 L 51/00  F 16 L 55/00  G 21 D  1/00  F 16 L  1/00 |

The present search report has been drawn up for all claims

| Place of search | Date of completion of the search | Examiner |
|---|---|---|
| VIENNA | 09-11-1988 | SCHUGANICH |

EPO Form 1503 03 82